(19)

Europäisches Patentamt

European Patent Office

Office européen des brevets

(11) **EP 3 916 671 A1**

(12) **EUROPEAN PATENT APPLICATION**

(43) Date of publication:
**01.12.2021 Bulletin 2021/48**

(51) Int Cl.:
**G06T 7/00** $^{(2017.01)}$

(21) Application number: **20176356.2**

(22) Date of filing: **25.05.2020**

<table>
<tr>
<td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

</td>
<td>

(71) Applicant: **Universität Zürich**
**8006 Zürich (CH)**

(72) Inventor: **Sanabria, Sergio**
**8091 Zürich (CH)**

(74) Representative: **Schulz Junghans**
**Patentanwälte PartGmbB**
**Großbeerenstraße 71**
**10963 Berlin (DE)**

</td>
</tr>
</table>

(54) **METHOD FOR GENERATING ECHOGENICITY IMAGES AND ELASTOGRAPHY IMAGES IN ULTRASOUND IMAGING OF TISSUE SAMPLES DEVOID OF CONTRAST AGENTS**

(57) The invention relates to a computer-implemented method for generating echogenicity contrast images for visualizing physical deformations and echogenicity changes as well as for generating strain images for visualizing physical strain in a tissue sample devoid of administered contrast agents, wherein the method relies on the determination of differential displacement and echogenicity transformations in order to reduce unwanted artefacts.

Fig. 2

**Description**

The invention relates to a computer-implemented method for generating contrast images for visualizing physical deformations and echogenicity changes in a sample without contrast agents.

Ultrasound (US) is a radiation-free, safe and cost-efficient modality, which is widely available for tissue and pathology diagnostics. US-guided injections are increasingly used to guide musculoskeletal interventions, allowing for continuous real-time visualization of needle and target muscles, as well as structures to be protected.

In general, US-guided injections typically rely on the visualization of the echogenic needle tip before injection and correct alignment with respect to target tissue structures. Injectate spread in the tissue is currently qualitatively identified by comparison of multiple frames in the US cine, where small image contrast variations and tissue movement during the injection process are visually identified.

However, correctly identifying and visualizing contrast variations and tissue movements still remains a complicated task prone to various sources of artefacts and errors.

An object of the present invention is to provide an improved, robust and reliable method for ultrasound imaging of biological tissue without the provision of contrast agents. The object is achieved by the method having the features of claim 1.

Advantageous embodiments are described in the subclaims.

According to a first aspect of the invention, a computer-implemented method for generating contrast images for visualizing physical deformations and echogenicity changes in a sample comprising or consisting of tissue in a sequence of ultrasound images, comprises the steps of:

a) Acquiring a plurality of ultrasound images of the sample and determining a sequence from said plurality of images, wherein the sequence comprises a plurality of frames ($F_1$, $F_2$, $F_3$, $F_4$),

b) Determining a first reference frame ($F_1$) of the particularly time-ordered sequence,

c) Determining for each frame ($F_2$, $F_3$, $F_4$) in the sequence an aligned frame ($F_{4,1}$, $F_{3,1}$, $F_{2,1}$) by means of a main transformation that is particularly applied to each frame, wherein said aligned frame ($F_{4,1}$, $F_{3,1}$, $F_{2,1}$) is registered to the first reference frame ($F_1$),

d) Determining a plurality of aligned differential echogenicity contrast images ($F_{4,1}$ - $F_{3,1}$, $F_{3,1}$ - $F_{2,1}$, $F_{2,1}$ - $F_1$), wherein the aligned differential echogenicity contrast images ($F_{4,1}$ - $F_{3,1}$, $F_{3,1}$ - $F_{2,1}$, $F_{2,1}$ - $F_1$) correspond to a difference of pairs of adjacent aligned frames ($F_{4,1}$, $F_{3,1}$, $F_{2,1}$),

e) Applying to each aligned differential echogenicity contrast image ($F_{4,1}$ - $F_{3,1}$, $F_{3,1}$ - $F_{2,1}$, $F_{2,1}$ - $F_1$) at least one first filter ($HPF1_m$, $M_{ij}$), wherein the at least one first filter comprises a temporal filter ($HPF1_m$) extending over a plurality of aligned differential echogenicity contrast images and/or wherein the at least one first filter comprises a spatial filter ($M_{ij}$) for the aligned differential echogenicity contrast images,

f) Generating at least one cumulative echogenicity contrast image ($\dot{F}_{4,1}$ - $\dot{F}_1$) by adding to each filtered aligned differential echogenicity contrast image ($F_{4,1}$ - $F_{3,1}$) all preceding filtered aligned differential echogenicity contrast image ($\dot{F}_{2,1}$ - $\dot{F}_1$, $\dot{F}_{3,1}$ - $\dot{F}_{2,1}$),

g) Particularly displaying at least one cumulative echogenicity contrast image.

Prior or during the execution of the method an administration of a fluid, such as a drug administration, for instance in form of an injection in the sample can be made. The injectate may be a liquid, solid or gaseous medium which might cause physical deformations and changes in echogenicity in the sample. The method according to the invention allows for visualizing said changes, while correcting for movements artefacts that might be introduced by a handheld ultrasound probe used for acquisition of the ultrasound images.

The injectate is particularly not a contrast agent for ultra-sound imaging.

The method can be used to visualize flow within tissue compartments to improve its delineation.

The acquisition of the sequence of ultrasound images can be made by an ultrasonic imaging device and/or comprises the acquisition of digital data such as a data file from a computer, wherein the digital data comprises information on the sequence.

From the sequence a series of frames might be generated, for example by assigning each image to a frame. Alternatively, it is possible to apply a pre-processing filter to the images of the sequence, wherein the frames correspond to the filtered images.

Such pre-processing filter can comprise an averaging, pooling or binning filter. Averaging might be performed in a spatial or in a temporal fashion. The pre-processing filter might also be a dynamic filter that adapts to the information content of each image.

According to another embodiment the pre-processing filter is configured to skip or reorder or to concatenate image for generating the sequence of frames.

The frames are particularly representable in form of a tensor or a matrix. The frames are particularly stored and receivable in form of a digital data. As such they can be processed by a computer.

The frames are generally referred to with reference sign '$F_m$', wherein the index refers to a frame number m in the sequence.

Without loss of generality, it is assumed that the sequence of frames has M frames.

The frames might be two-dimensional images, volumetric images, or even have a higher dimension. Subsequent transformations and filter are adapted accordingly to the dimensions of the frames.

Depending on the ultrasound system and probe used for acquisition, different frame formats may be generated. For instance, convex or curvilinear probes may generate polar image formats, while 3D-ultrasound imaging probes may provide a volumetric image for each frame. Other ultrasound probes may provide higher dimensional-information for each frame (for instance, multiple elastography modalities).

The first reference frame $F_1$ can be the first frame in the particularly time-ordered sequence of frames. The sequence of frames can be assigned to a time code or an index indicative for a position in the sequence.

In step c) of the method each frame $F_{1+m}$ after the first reference frame $F_1$ is registered to the first reference frame $F_1$ such that movements of the sample are compensated by the main transformation.

The main transformation can comprises plurality of transformation steps that can be executed in a sequence.

The main transformation particularly comprises a digital image correlation method. But other methods can be applied as well, such as for example a method based on the analysis of an optical flow between frames.

The aligned frames that are registered to the first reference frame are referred to as $F_{m,1}$.

The aligned frames are particularly assigned to the same position in the sequence as the unregistered frame, such that they can be addressed by means of the same index.

In order to generate aligned differential echogenicity contrast images, pairs of adjacent aligned frames are subtracted from each other. In general terms this particularly corresponds to the calculation of $F_{m+1,1} - F_{m,1}$. Each of these aligned differential echogenicity contrast images is particularly assigned to the m+1 frame, such that a time-ordered sequence of the subsequent difference images is maintained.

The inventors have found that applying the at least one first filter to the aligned differential echogenicity contrast images allows for a very robust and precise estimation of echogenicity contrast as compared to the state of the art, where no such intermediate filtering is applied to aligned differential echogenicity contrast images. The advantage of filtering intermediately is that the method becomes more robust and provides better registration and image contrast properties, particularly exhibiting fewer registration artefacts, while preserving the physical changes of the tissue sample.

Applying the at least one first filter is particularly referred to as spatiotemporal filtering. Spatiotemporal filtering particularly exploits the temporal statistics of an injection of an injectate, such as a liquid into the tissue sample to improve its delineation. In contrast to the known methods, (e.g. 2D-digital image correlation), both the deformation calculation and frame subtraction steps in 2D-DIC are modified to accommodate spatiotemporal filters. Conceptually, spatiotemporal filtering splits the deformation and echogenicity calculation sub-steps into differential steps between subsequent, particularly successive frames. The splitting allows applying spatial and temporal filters to filter out hyperechogenic tissue patterns. Hyperechogenic tissue patterns are present in the tissue prior to the injection (for instance, due to the presence of muscle fascia). Hyperechogenic tissue patterns introduce bias and artefacts in the deformation calculation and frame subtraction steps. By filtering out hyperechogenic tissue patterns the dynamics of the injection process are highlighted.

The at least one first filter can be a temporal filter that takes into account information of preceding and subsequent frames.

Particularly, the at least one first filter can be a temporal high pass filter $HPF1_m$ that is applied to the differential contrast (i.e. to the aligned differential echogenicity contrast images) to minimize static bias patterns and highlight dynamic injection echogenicity variations. Additionally, the at least one first filter can comprise a spatial median filter $MF_{ij}$ that reduces speckle noise in the spatial domain due to image registration variance.

The at least one cumulative echogenicity contrast image is then generated from the filtered aligned differential echogenicity contrast images.

In general, any cumulative echogenicity contrast image can be expressed as

$$F_{M,1} - F_1 = \sum_{m=2}^{M} F_{m,1} - F_{m-1,1} \quad,$$

wherein $F_{1,1} = F_1$, and $F_{m,1} - F_{m-1,1}$ are the differential echogenicity contrast images. These differential echogenicity contrast images are also referred to as differential echogenicity contrast in the context of the current application.

The cumulative echogenicity contrast images provide information on spatial deformations in the sample that occurred during acquisition of the ultrasound frames, while movement artefacts, for example, due to varying imaging depth or elevation caused by displacements of a handheld ultrasound probe, are greatly reduced. This is particularly important when a liquid is administered to the sample during the acquisition of the ultrasound image that might cause physical distortions or swellings in the sample that should not be assigned to movement artefacts but are of importance.

According to another embodiment of the invention, particularly for determining the main transformation, the method further comprises the steps of:

- Determining for each frame ($F_4$, $F_3$, $F_2$) in the sequence an associated differential displacement transformation ($\Delta U_{4,3}$, $\Delta U_{3,2}$, $\Delta U_{2,1}$, $\Delta U_{4,2}$) configured to register the frame ($F_4$, $F_3$, $F_2$) to a preceding frame ($F_3$, $F_2$, $F_1$), particularly to a directly preceding frame,
- Filtering each differential displacement transformation ($\Delta U_{4,3}$, $\Delta U_{3,2}$, $\Delta U_{2,1}$, $\Delta U_{4,2}$) with at least one second filter, particularly wherein the second filter is identical to the at least one first filter,
- Determining for each frame ($F_4$, $F_3$, $F_2$) an associated cumulative displacement transformation ($U_{4,1}$, $U_{3,1}$, $U_{2,1}$), wherein the associated cumulative displacement transformation ($U_{4,1}$, $U_{3,1}$, $U_{2,1}$) is determined by combining at least one of the plurality of filtered differential displacement transformations ($\Delta U_{2,1}$), particularly all differential displacement transformations ($\Delta U_{4,3}$, $\Delta U_{3,2}$, $\Delta U_{2,1}$) for the frames preceding and including the frame ($F_4$, $F_3$, $F_2$, such that the frame ($F_4$, $F_3$, $F_2$) can be registered to the first reference frame ($F_1$) with the associated cumulative displacement transformation ($U_{4,1}$, $U_{3,1}$, $U_{2,1}$).

This embodiment provides a cumulative displacement transformation that is derived from differential displacement transformations, such that a robust cumulative transformation is obtained that takes into account the correlation loss that increases as the temporal distance between the first and any subsequent frames increases. By determining the cumulative displacement transformation based on the differential displacement transformations information of correlation of adjacent frames is preserved to a large extent.

The differential and the cumulative displacement transformations are particularly displacement fields that indicate a displacement of portions of the tissue sample particularly along three directions, e.g. two lateral directions (x,y) and one axial direction (z). Such displacement fields can associate to each element, particularly to each pixel in the frame, a vector of displacement with respect to a previous or subsequent frame.

According to an another embodiment of the invention, particularly for determining the aligned frame ($F_{4,1}$, $F_{3,1}$, $F_{2,1}$) for each frame ($F_4$, $F_3$, $F_2$) in the sequence the aligned frame ($F_{4,1}$, $F_{3,1}$, $F_{2,1}$) is determined by applying the associated cumulative displacement transformation ($U_{4,1}$, $U_{3,1}$, $U_{2,1}$) to the frame ($F_4$, $F_3$, $F_2$).

It is noted that the application of any transformation might be coupled with an interpolation method $I^{ij}$, also referred to interpolation block in the current specification.

The interpolation block can be implemented as a bilinear interpolation, using for example nine neighbouring lags [-1, 0, 1] of each pixel to calculate sub-pixel grayscale values. Other common methods include, for instance, nearest-neighbour interpolation, bicubic or spline-based interpolation.

This embodiment allows for a determination of the cumulative echogenicity contrast images in a less complex fashion and thus in a computationally less expensive way. However, depending on the dataset this method might be not as accurate as an alternative embodiment that is described in the following.

According to an alternative embodiment of the invention, for determining the plurality of aligned differential echogenicity contrast images ($F_{4,1}$ - $F_{3,1}$, $F_{3,1}$ - $F_{2,1}$, $F_{2,1}$ - $F_1$), the following steps are executed:

- Applying to each frame ($F_4$, $F_3$, $F_2$) the filtered associated differential displacement transformations ($\Delta U_{4,3}$, $\Delta U_{3,2}$, $\Delta U_{2,1}$, $\Delta U_{4,2}$) such that for each frame ($F_4$, $F_3$, $F_2$) a deformation corrected frame ($F_{4,3}$, $F_{3,2}$, $F_{2,1}$) is obtained that is registered to the preceding frame ($F_3$, $F_2$, $F_1$),
- Determining for each frame ($F_4$, $F_3$, $F_2$) a differential echogenicity contrast image ($F_{4,3}$-$F_3$, $F_{3,2}$-$F_2$, $F_{2,1}$-$F_1$, $F_{4,2}$-$F_2$) by subtracting the preceding frame ($F_3$, $F_2$, from the deformation corrected frame ($F_{4,3}$, $F_{3,2}$, $F_{2,1}$, $F_{4,2}$),
- Applying the associated cumulative displacement transformation ($U_{3,1}$, $U_{2,1}$) associated to the preceding frame ($F_3$, $F_2$) to the differential echogenicity contrast image ($F_{4,3}$-$F_3$, $F_{3,2}$-$F_2$, $F_{2,1}$-$F_1$) and therewith determining the plurality of aligned differential echogenicity contrast images ($F_{4,1}$ - $F_{3,1}$, $F_{3,1}$ - $F_{2,1}$, $F_{2,1}$ - $F_1$).

This embodiment allows for a more robust and less artefact-prone determination of the at least one cumulative echogenicity contrast image in subsequent steps.

According to another embodiment of the invention, the at least one first filter comprises a temporal high-pass filter, particularly configured to minimize bias patterns in the frames and to highlight dynamic echogenicity variations in the frames.

Particularly the high-pass filter extends over at least three or more subsequent frames or associated contrast images or transformations.

The high-pass filter $HPF1_m$ or $HPF2_m$ for a frame or transformation associated to index m can be calculated according to

$$HPF_N\left(F_m^{i,j}\right) = F_m^{i,j} - MF_N\left(F_m^{i,j}\right)$$

Wherein m is the index of the frame or the associated frame, and N is the order of the high-pass filter and i,j, are the elements, particularly the pixels of the frame. $MF_N$ is a one-dimensional median filter applied to the frame with index m. For example, m may represent the temporal axis during real-time ultrasound frame acquisition. For the high-pass filter of the at least one first filter $HPF1_m$, N equals for example 30 or extends over a duration of 1.2 s for a frame rate of 25 frames/second, wherein for the second filter $HPF2_m$, N equals for example 100 or extends over a duration of 4 s.

According to another embodiment of the invention, the at least one first filter comprises a spatial filter, particularly configured to reduce speckle noise in the spatial domain due to image registration uncertainties.

The spatial filter is for example a two-dimensional median filter $MF^{ij}$ of the order 3 or more (corresponding to 0.3 mm or more for an image pixel size is 0.1 mm), particularly wherein the filter further comprises a threshold filter for values in the frame or processed frame lower than 0.02% of the highest value.

According to another embodiment of the invention, the at least one first filter comprises a spatial thresholding filter, particularly configured and adapted to filter out noise in a selected value range.

The cut-off can for example be set to 0.02% of the highest value of all frames or any of processed differential images. The threshold filter provides a striking improvement with regard to image quality of the resulting cumulative echogenicity contrast image. According to another embodiment of the invention, the second filter comprises a temporal filter, particularly a temporal high pass filter, extending over a plurality of particularly adjacent incremental displacement transformations.

The temporal filter can be a high-pass filter with similar settings as the high-pass filter of the at least one first filter.

According to another embodiment of the invention, the differential displacement transformations are determined by a displacement tracking method, particularly by a digital image correlation method.

According to another embodiment of the invention, the differential displacement transformation ($\Delta U_{4,2}$) is determined for each frame ($F_4$) from a concatenated frame comprising the frame ($F_4$) and the preceding frame ($F_2$), particularly additionally comprising preceding ($F_3$, and subsequent frames ($F_5$, $F_6$), particularly for improving the accuracy of incremental displacement transformation.

For instance, in a digital image correlation method, a collection of pixels given by the union of ($F_5$, $F_4$, $F_3$) may be correlated to a collection of pixels given by the union of ($F_3$, $F_2$, to determine $\Delta U_{4,2}$. Similarly, several estimates of $\Delta U_{4,2}$ may be calculated by performing multiple correlation calculations between $F_4$ and $F_2$, between the unions ($F_5$, $F_4$, $F_3$) and ($F_3$, $F_2$, $F_1$), and between the unions ($F_6$, $F_5$, $F_4$, $F_3$, $F_2$) and ($F_5$, $F_4$, $F_3$, $F_2$, $F_1$). This estimates of $\Delta U_{4,2}$ may then be combined, for instance, using a weighted average.

In another example, multiple incremental differential displacement calculations comprising adjacent and subsequent frames of $F_4$ and $F_2$ may be combined to improve the accuracy of $\Delta U_{4,2}$. For instance, a deformation atlas for $\Delta U_{4,2}$ may be generated by considering multiple differential displacement combinations ($\Delta U_{4,2}$, $\Delta U_{4,3} + \Delta U_{3,2}$, $\Delta U_{5,2} - \Delta U_{5,4}$, $\Delta U_{5,3} + \Delta U_{3,1} - \Delta U_{5,4} - \Delta U_{2,1}$). This combinations may then combined into an accurate estimate of $\Delta U_{4,2}$ with a least-squares algorithm. Other combination methods may be used to reduce outliers, such as random sample consensus or Markov models.

According to another embodiment of the invention, the ultrasound images are B-mode images, particularly wherein the images are acquired for a tissue sample without any contrast agent administered, such that any signal is obtained only from tissue inherent structures and properties.

According to another embodiment of the invention, for each frame the associated cumulative echogenicity contrast image is overlaid to the associated frame and displayed, particularly together with the associated frame.

This embodiment allows for a better visual comparison between the frame and the echogenicity contrast image, such that deformations can be perceived more easily.

According to another embodiment of the invention, the ultrasound images are acquired from samples devoid of administered contrast agents. The calculated echogenicity images provide sufficient sensitivity to visualize physical variations of the sample.

According to another embodiment of the invention, wherein the cumulative displacement transformations ($U_{4,1}$, $U_{3,1}$, $U_{2,1}$) are determined in form of a tensor, particularly wherein the tensor comprises components ($v_{la}$) that represent a lateral displacement transformation of an element (i, j) in the associated frame with respect to the first reference frame and components ($v_{ax}$) that represent an axial displacement transformation of an element (i,j) in the associated frame ($F_4$, $F_3$, $F_2$) with respect to the first reference frame ($F_1$), wherein a strain image ($E_{4,1}$) is determined for at least one cumulative displacement transformation ($U_{4,1}$), wherein each element of the strain image ($E_{4,1}$) corresponds to at least one partial derivative along one direction at the corresponding element (i, j) of the at least one cumulative displacement transformation ($U_{4,1}$), particularly wherein each element of the strain image ($E_{4,1}$) corresponds to a sum of a plurality of or all partial derivatives along a plurality of directions at the corresponding element of the cumulative displacement transformation tensor, particularly wherein at the strain image ($E_{4,1}$) is displayed.

Particularly, the strain image has the same dimensions as the cumulative displacement transformation.

It is noted that a plurality of strain images can be generated, by choosing to associate partial derivatives along different directions to the elements of the strain image. As such it is possible to provide information about a lateral strain only and/or an axial strain only, or a combined lateral and an axial strain in the tissue.

The strain image essentially allows detecting portions of the tissue that are deformed less or that are compressed to a lesser degree or that are swelled to a lesser degree as compared to other portions that show a larger degree of deformation and/or compression and/or swelling.

The strain image can be displayed together with the cumulative echogenicity contrast image and provide a comprehensive means for evaluating tissue deformation and strain elastography.

The problem according to the invention is furthermore solved by a second aspect of the invention relating to a computer program.

According to the second aspect, a computer program is disclosed, for generating echogenicity contrast images for visualizing physical deformations and changes in echogenicity in a tissue sample in a sequence of ultra-sound images, wherein the computer program comprises computer program code that when executed on a computer causes the computer to execute the method according to the invention.

A third aspect of the invention relates to strain imaging in tissue samples.

Specifically, the third aspect relates to a computer-implemented method for generating strain elastography images of a tissue sample, particularly comprising an injection of an injectate, such as a liquid into the tissue sample, the method comprising the steps of:

a) Acquiring a plurality of ultrasound images of the sample and determining a sequence with plurality of frames ($F_1$, $F_2$, $F_3$, $F_4$) form said plurality of images,

b) Determining a first reference frame ($F_1$) of the particularly time-ordered sequence,

c) Determining for each frame ($F_4$, $F_3$, $F_2$) in the sequence an associated differential displacement transformation ($\Delta U_{4,3}$, $\Delta U_{3,2}$, $\Delta U_{2,1}$) configured to register the frame ($F_4$, $F_3$, $F_2$) to a preceding frame ($F_3$, $F_2$, $F_1$), particularly to a directly preceding frame,

d) Filtering each differential displacement transformation ($\Delta U_{4,3}$, $\Delta U_{3,2}$, $\Delta U_{2,1}$) with at least one second filter, particularly wherein the second filter is identical to the at least one first filter,

e) Determining for each frame ($F_4$, $F_3$, $F_2$) an associated cumulative displacement transformation ($U_{4,1}$, $U_{3,1}$, $U_{2,1}$), wherein the associated cumulative displacement transformation ($U_{4,1}$, $U_{3,1}$, $U_{2,1}$) is determined by combining at least one of the plurality of filtered differential displacement transformations ($\Delta U_{2,1}$), particularly all differential displacement transformations ($\Delta U_{4,3}$, $\Delta U_{3,2}$, $\Delta U_{2,1}$) for the frames preceding and including the frame ($F_4$, $F_3$, $F_2$, such that the frame ($F_4$, $F_3$, $F_2$) can be registered to the first reference frame ($F_1$) with the associated cumulative displacement transformation ($U_{4,1}$, $U_{3,1}$, $U_{2,1}$), wherein the cumulative displacement transformations ($U_{4,1}$, $U_{3,1}$, $U_{2,1}$) are determined in form of a tensor, particularly wherein the tensor comprises components ($v_{la}$) that represent a lateral displacement transformation of an element ($i$, $j$) in the associated frame with respect to the first reference frame and components ($v_{ax}$) that represent an axial displacement transformation of an element ($i,j$) in the associated frame ($F_4$, $F_3$, $F_2$) with respect to the first reference frame ($F_1$), wherein a strain image ($E_{4,1}$) is determined for at least one cumulative displacement transformation ($U_{4,1}$), wherein each element of the strain image ($E_{4,1}$) corresponds to at least one partial derivative along one direction at the corresponding element ($i$, $j$) of the at least one cumulative displacement transformation ($U_{4,1}$), particularly wherein each element of the strain image ($E_{4,1}$) corresponds to a sum of a plurality of or all partial derivatives along a plurality of directions at the corresponding element of the cumulative displacement transformation tensor, particularly wherein at the strain image ($E_{4,1}$) is displayed.

It is noted that terms and definitions for the first aspect of the invention do apply to the third aspect in the same fashion. Particularly the properties and features of the differential and cumulative displacement transformations, the acquisition of ultrasound images, the generation of frames in a sequence, particularly with pre-processing filters are applicable to the third aspect of the invention as well.

In the following some applicable embodiments of the third aspect of the invention are disclosed.

According to another embodiment of the third aspect, the second filter comprises a temporal filter, particularly a temporal high pass filter, extending over a plurality of particularly adjacent incremental displacement transformations.

The temporal filter can be a high-pass filter with similar settings as the high-pass filter of the at least one first filter.

The second filter might be the same as the second filter for the first aspect of the invention.

According to another embodiment of the invention, the differential displacement transformations are determined by a displacement tracking method, particularly by a digital image correlation method.

Particularly, exemplary embodiments related to all or some aspects of the invention are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

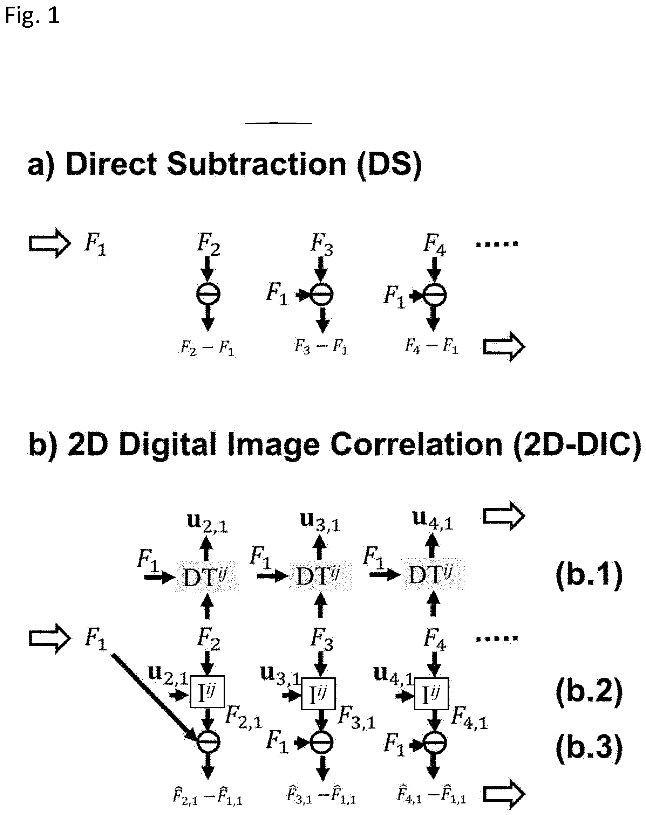

In Fig. 1 two different embodiments known in the art are depicted.

In Fig 1A the so-called direct subtraction method is shown, where from a sequence of frames $F_1$, $F_2$, $F_3$... the first reference frame is simply subtracted in order to highlight changes with regard to said first reference frame. However, disadvantageously, any movement of the sample relative to the ultrasound probe will cause a change that is then visible in the difference image, even though the relative movement is completely unrelated to a deformation of the tissue sample.

This drawback is partially overcome by the method shown in Fig. 1B. This method is based in 2D digital image correlation.

2D digital image correlation provides information on movements of the tissue sample for each frame.

As can be seen, from the sequence of frames $F_1$, $F_2$, $F_3$ a displacement transformation $U_{2,1}$, $U_{31}$ and $U_{4,1}$ is determined by directly correlating the first reference frame $F_1$ to the respective subsequent frame $F_2$, $F_3$, $F_4$ (step b1).

In step b2 of Fig. 1B, the displacement transformation $u_{2,1}$, $u_{31}$, $u_{4,1}$ is applied to the associated frames $F_2$, $F_3$, $F_4$ and a deformation-corrected frame $F_{2,1}$, $F_{3,1}$, $F_{4,1}$ is generated, particularly by also applying an interpolation block $I^{ij}$ in order to reduce pixilation artefacts.

Then in order to arrive at a contrast image, these deformation images are subtracted from the first reference frame in step b3.

While this approach improves on reducing motion artefacts, it still suffers from any long term decorrelation of the sequence that might occur to shifting of the image planes and the like. Therefore, for longer sequences the conventional 2D digital correlation method is prone to essentially the same artefacts as the direct subtraction method.

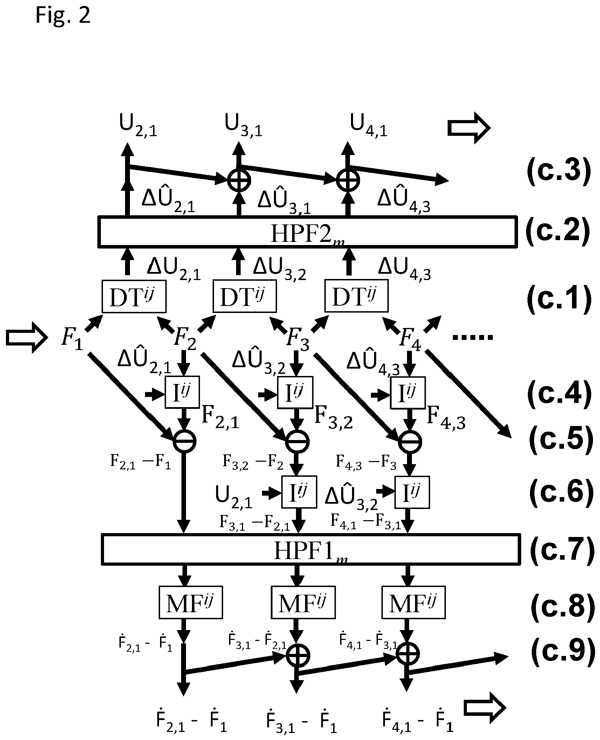

Fig. 2 shows a flow diagram depicting an embodiment according to the invention.

An acquired sequence of ultrasound images is organized as a time-ordered sequence of frames $F_1$, $F_2$, $F_3$, ... $F_m$,... $F_M$, wherein m is a variable frame index and M is the total number of frames, i.e. $F_M$ is the last frame in the sequence. In the most straight forward embodiment, each recorded image corresponds to one frame in the sequence. However, alternatively several images can be pooled, time-averaged or otherwise combined into a single frame.

Particularly, during or shortly before acquisition an injection of a fluid into the sample takes place, such that tissue deformations caused by said injection might be observed.

Acquisition of images might be performed with a hand-held ultrasound probe having a ultrasound generator and receiver.

The frames are essentially digital representations of the information comprised in the images. Processing of the frames according to the method is for example facilitated by a computer, having a processor and a memory storage for storing the frames and intermediate results. The computer might be connected to the ultra-sound device such as to receive the data comprising the acquired images.

Each frame can be expressed as a matrix or tensor associated with an index that is indicative of a temporal position of the frame in the sequence. Moreover, each frame comprises elements such as pixels that might addressed by means of an index $i, j$.

In a first step after acquisition, (Fig. 1 - c1), a deformation tracking $DT^{ij}$ is calculated between adjacent frame pairs, that is, between frame $F_2$ and reference frame $F_1$, between frame $F_3$ and reference frame $F_2$, and so on successively. The indices i and j refer to the elements, e.g. pixels, in each frame, in case the frames are represented in form of two-dimensional tensors. In case of higher dimensional frames correspondingly more indices might be used. Thus, the deformation tracking assigns each element $i, j$ of the frame a deformation tracking value, that associates each pixel of the reference frame $F_m$ with the corresponding frame $F_{m+1}$ of the frame pair, such that a deformation is established element wise.

Deformation Tracking $DT^{ij}$ estimates the local deformation fields at each axial i and lateral j pixels of the image. Deformation Tracking is based on finding the best local match for pixel templates in the reference and injection frames by maximizing a correlation function. At each pixel, the axial $v_{ax}(i, j)$ and $v_{la}(i, j)$ lateral displacements fields are summarized in a displacement vector field $U_{b,a} = [v_{ax}(i, j), v_{la}(i, j)]_{b,a}$, where deformation in frame b is calculated with respect to a frame a.

From the deformation tracking of the frame pairs, differential displacement transformations $\Delta U_{2,1}$, $\Delta U_{3,2}$, $\Delta U_{4,3}$ are determined - in a general notation the displacement transformations can be written as $\Delta U_{m+1,m}$. These differential displacement transformations $\Delta U_{2,1}$, $\Delta U_{3,2}$, $\Delta U_{4,3}$ are particularly determined from index wise directly adjacent frames, but can also be determined for frames that are not directly adjacent to each other, but particularly wherein the reference frame is also not the first reference frame of the sequence. Thus, for example the differential displacement field $\Delta U_{4,3}$ = $[v_{ax}(i, j), v_{la}(i, j)]_{4,3}$ comprises the axial and lateral displacement fields for the frames 4 and 3.

At a sufficiently high frame rate (here for example 25 frames/s), variations of the imaging scene between two successive frames, for instance, due to out-of-plane probe movement, can be neglected. Therefore, deformation tracking with adjacent frame pairs provides high quality tissue displacement estimates for all frames, characterized by larger correlation maxima. This minimizes the correlation loss of deformation tracking over time.

Moreover, it allows filtering out deformation bias due to hyperechogenic tissue structures. Deformation bias is present as a static deformation component in all calculation steps, whereas physical deformation due to injection occurs dynamically with varying patterns in time. Deformation bias may occur when a hyperechogenic tissue structure (for instance, connective fascia tissue) is adjacent to hypoechogenic muscle fibers. In this case, deformation estimates may be offset by the deformation present in adjacent hyperechogenic pixels, thus introducing a bias in the calculated deformation for hypoechogenic pixels.

In a subsequent second step (Fig. 1 - c2), a high pass filter $HPF2_m$, also referred to as the at least one second filter in the current specification, along the temporal axis is applied to the differential displacement transformations $\Delta U_{2,1}$, $\Delta U_{3,2}$, $\Delta U_{4,3}$ configured to minimize bias patterns while preserving the injection deformation in the differential displacement transformations. The high pass filter $HPF2_m$, extends over a range of N frames and is applied to frame associated to index m. This allows filtering out deformation bias due to hyperechogenic tissue structures. Deformation bias is present as a quasi-static deformation component in all calculation steps, whereas physical deformation due to injection occurs dynamically with varying patterns in time.

In a third step (Fig. 1- c3), the filtered differential displacement transformations $\Delta\hat{U}_{2,1}$, $\Delta\hat{U}_{3,2}$, $\Delta\hat{U}_{4,3}$ are then accumulated resulting in associated cumulative displacement transformations $U_{2,1}$, $U_{3,1}$, $U_{4,1}$ with respect to the first reference frame $F_1$.

The accumulation of (filtered) differential displacement transformations $\Delta U_{2,1}$, $\Delta U_{3,2}$, $\Delta U_{4,3}$ minimizes correlation loss over time, which is present in 2D-DIC, for instance, due to gradual out-of-plane probe drifts.

In a fourth step (Fig. 2 - c4), an interpolation block $I^{ij}$ is used with the filtered differential tissue displacements $\Delta\hat{U}_{2,1}$, $\Delta\hat{U}_{3,2}$, $\Delta\hat{U}_{4,3}$ (more general $\Delta\hat{U}_{m+1,m}$) to realign each of the frames $F_2$, $F_3$, $F_4$ with sub-pixel resolution with respect to their preceding frames $F_1$, $F_2$, $F_3$ resulting in the deformation corrected frames $F_{2,1}$, $F_{3,2}$, $F_{43}$ (more general $F_{m+1,m}$).

In a fifth step (Fig. 2 - c5), differential echogenicity contrast images are calculated between adjacent frames pairs $F_{2,1}$ - $F_1$, $F_{3,2}$ - $F_2$, $F_{4,3}$ - $F_3$ (more general $F_{m+1,m}$ - $F_m$).

In a sixth step (Fig. 2 - c6), the interpolation block $I^{ij}$ is used again to realign all differential echogenicity contrast images $F_{2,1}$ - $F_1$, $F_{3,2}$ - $F_2$, $F_{4,3}$ - $F_3$ with respect to the first reference frame $F_1$. For this purpose, the associated cumulative displacement transformations $U_{2,1}$, $U_{3,1}$, $U_{4,1}$ are applied to the differential echogenicity contrast images $F_{2,1}$ - $F_1$, $F_{3,2}$ - $F_2$, $F_{4,3}$ - $F_3$. The resulting aligned differential echogenicity contrast images are written as $F_{2,1}$ - $F_1$, $F_{3,1}$ - $F_{2,1}$, $F_{4,1}$ - $F_{3,1}$.

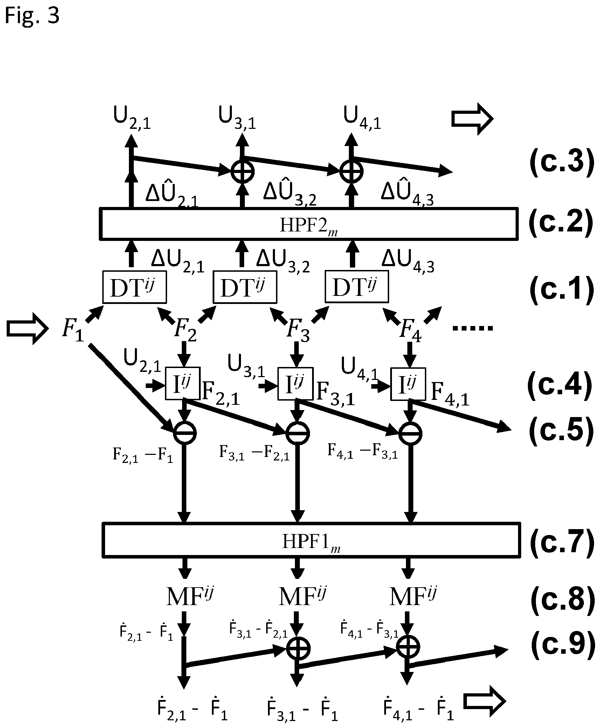

Splitting the interpolation in two steps (Fig. 2 - c4 and Fig. 3 - c6) allows using high-quality tissue displacement fields for differential echogenicity contrast calculation (Fig. 2 - c5), where hyperechogenic tissue structures are filtered out.

Next, (Fig. 1 - c7), a temporal high pass filter $HPF1_m$, also referred to as the at least one first filter in the current specification, along the temporal axis is applied to the aligned differential echogenicity contrast images $F_{2,1}$ - $F_1$, $F_{3,1}$ - $F_{2,1}$, $F_{4,1}$ - $F_{3,1}$ to further minimize the static bias patterns and to highlight the dynamic injection echogenicity variations. Additionally (Fig. 1 - c8), a spatial median filter $MF^{ij}$ that is comprised by the at least one first filter is applied to each differential echogenicity contrast image to reduce speckle noise in the spatial domain of the differential contrast images due to random sub-pixel uncertainties in the image registration process (variance), together with a thresholding operation to separate noise from the dynamic injectate component image registration variance.

Then, (Fig. 1- c9), the filtered aligned differential echogenicity contrast images $\dot{F}_{2,1}$ - $\dot{F}_1$, $\dot{F}_{3,1}$ - $\dot{F}_{2,1}$, $\dot{F}_{4,1}$ - $\dot{F}_{3,1}$ are added to calculate cumulative echogenicity contrast images with respect to the reference frame $F_1$. The resulting cumulative echogenicity contrast images $\dot{F}_{2,1}$ - $\dot{F}_1$, $\dot{F}_{3,1}$ - $\dot{F}_1$, $\dot{F}_{4,1}$ - $\dot{F}_1$ provide echogenicity contrast with respect to the first frame $F_1$, where spatiotemporal filtering has been used to highlight the injectate presence.

In Fig. 3 an alternative embodiment of the invention is shown. The method steps c1 to c3 of this embodiment are essentially identical to the methods steps c1 to c3 of the embodiment shown of Fig. 2 and are therefore not redundantly disclosed at this point.

However, in contrast to the embodiment in Fig. 2 the associated cumulative displacement transformations $U_{2,1}$, $U_{3,1}$, $U_{4,1}$ are applied with the interpolation block $I^{ii}$ to the respective frames $F_2$, $F_3$, $F_4$ such that the frames are registered ($F_{2,1}$, $F_{3,1}$, $F_{4,1}$) to the first reference frame $F_1$ are obtained in step c4 in Fig. 3. In a subsequent step c5, the aligned differential echogenicity contrast images $F_{2,1}$ - $F_1$, $F_{3,1}$ - $F_{2,1}$, $F_{4,1}$ - $F_{3,1}$ are determined. In order to maintain the largest degree of correspondence between the methods steps of the embodiments of Fig, 2 and Fig. 3, step c6 in Fig. 3 is omitted (or empty), such that correspondence is maintained for step c7 between the two embodiments.

In step c7 and c8, similar to Fig. 2, the at least one first filter comprising the temporal high pass filter $HPF1_m$ and the spatial median filter $M^{ij}$ is then applied to each of the aligned differential echogenicity contrast images $F_{2,1}$ - $F_1$, $F_{3,1}$ - $F_{2,1}$, $F_{4,1}$ - $F_{3,1}$ and the filtered aligned differential echogenicity contrast images $\dot{F}_{2,1}$ - $\dot{F}_1$, $\dot{F}_{3,1}$ - $\dot{F}_{2,1}$, $\dot{F}_{4,1}$ - $\dot{F}_{3,1}$ are obtained. The cumulative echogenicity contrast images $\dot{F}_{2,1}$ - $\dot{F}_1$, $\dot{F}_{3,1}$ - $\dot{F}_1$, $\dot{F}_{4,1}$ - $\dot{F}_1$ are obtained in step c9 that is identical to step c9 of Fig. 2.

The embodiment of Fig. 3 is slightly less robust than the embodiment of Fig. 2 but might be sufficient for certain image data to provide artefact-free echogenicity contrast images.

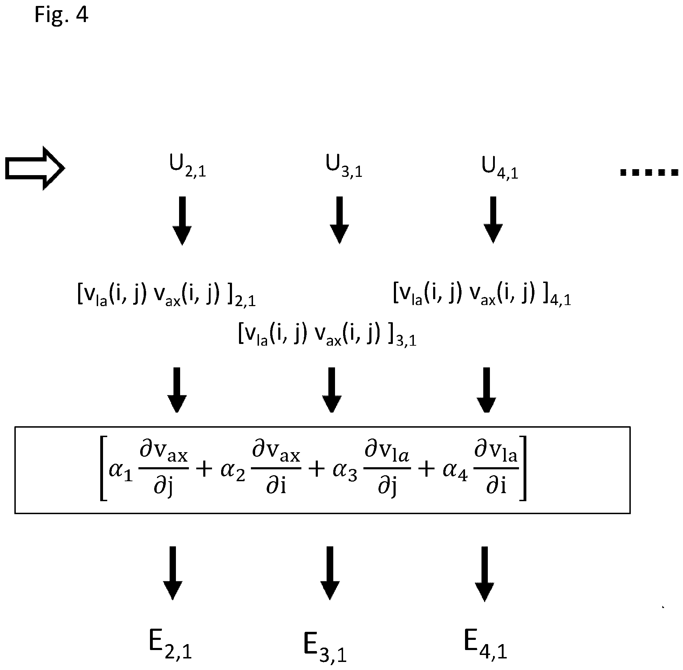

In Fig. 4 the alternative or additional processing steps for determining a strain elastography image by way of the differential displacement transformation and thus to obtain also a more robust and artefact free strain image as compared to the art.

Starting from the cumulative displacement transformations $U_{2,1}$, $U_{3,1}$, $U_{4,1}$ that are generated according to one of the embodiments according to the invention from the particularly filtered differential displacement transformations

$\Delta\hat{U}_{2,1}$, $\Delta\hat{U}_{3,2}$, $\Delta\hat{U}_{4,3}$, for generating a strain image $E_{2,1}$, $E_{3,1}$, $E_{4,1}$, at least one partial derivative $\dfrac{\partial v_{ax}}{\partial i}$, $\dfrac{\partial v_{ax}}{\partial j}$, $\dfrac{\partial v_{la}}{\partial i}$, $\dfrac{\partial v_{la}}{\partial j}$ is calculated with regard to the axial and/or lateral displacement fields $[v_{ax}(i, j), v_{la}(i, j)]_{m,1}$ of the cumulative displacement transformations $U_{2,1}$, $U_{3,1}$, $U_{4,1}$.

Particularly, the strain image $E_{2,1}$, $E_{4,1}$, $E_{4,1}$ comprises any of the linear combinations of the partial derivatives. Therefore, for example the strain image $E_{m,1}$ can be expressed as

$$E_{m,1} = \left[\alpha_1 \frac{\partial v_{ax}}{\partial j} + \alpha_2 \frac{\partial v_{ax}}{\partial i} + \alpha_3 \frac{\partial v_{la}}{\partial j} + \alpha_4 \frac{\partial v_{ll}}{\partial i}\right]_{m,1},$$ wherein $\alpha_k$ is particularly 0 or 1.

Particularly, the strain image associated to the swelling of frame m is given by

$$E_{m,1} = \left[\frac{\partial v_{ax}}{\partial i} + \frac{\partial v_{la}}{\partial j}\right]_{m,1}$$

The generated strain image $E_{m,1}$ allows for a more robust, precise and artifact free determination of the elastography strain in the tissue sample.

The invention provides a robust tool for determining deformation contrast images as well as elastography images.

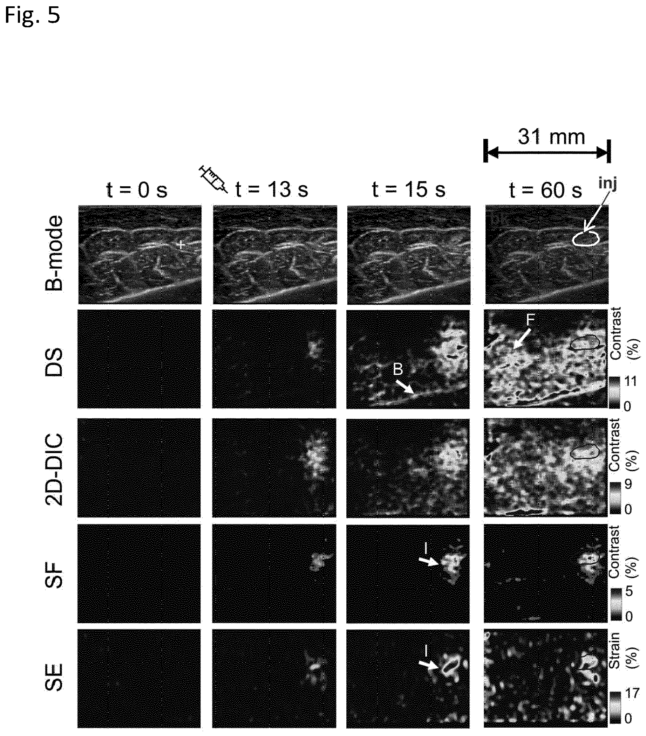

In Fig. 5 the method according to the invention is compared to the methods known in the art for a tissue sample that has been imaged in B-mode (first row) with an ultrasound device. The tissue is masseter muscle, for which injection of Botulinum Toxin Type A (BTX-A) is common for idiopathic masticatory myalgia treatment. The tissue was injected after 13 seconds (indicated by a syringe symbol) of acquisition of images with a BTX-A injectate without contrast agent.

The BTX-A injectate shows low echogenicity contrast (4.4% of maximum B-mode grayscale value), which did not allow visualization based on single B-mode frames. A continuous play of the acquired sequence of frames (also referred to as US cine in the description) is necessary to identify the BTX-A region (cf. reference sign "inj" with encircled region). The Direct Subtraction method (DS, second row) and the 2D-Digital image correlation method (2D-DIC, third row) resolve the injectate region at the first few injection frames (t = 13 s) but show a loss of coherence with increasing frame numbers, i.e. acquisition time. At t = 15 s, DS artifacts (contrast to noise ratio CNR=0.9) at hyperechogenic bone region (B) are removed by 2D-DIC, but at t = 60 s, additional fascia (F) and bone artifacts (B) can only be partially compensated, and the injection region was challenging to visualize (CNR=1.2). The CNR is calculated as the contrast in the BTX-A region "inj" divided by the standard deviation of the noise outside the "inj" region. Higher CNR values are obtained when image artifacts are removed.

In contrast, the method according to the invention (SF, fourth row) successfully removes most background (bk) tissue artefacts allowing delineation of the BTX-A region over time. Accordingly, the CNR increases (CNR=2.5). Moreover, SF provides improved cumulative contrast images that show less artefacts as compared to 2D-DIC method only.

Also the strain images (SE, fifth row) (CNR = 2.6) show a satisfactory delineation of tissue swelling strains over the injectate region, with a minor increase of bk artifacts over time.. Observation of the cine showed that injectate spread area consistently does not grow after 1.2 s, with additionally injected BTX-A staying confined in the same region.

## Claims

1. A computer-implemented method for generating echogenicity contrast images for visualizing physical deformations and echogenicity changes in a tissue sample in a sequence of ultrasound images, the method comprising the steps of:

    a) Acquiring a plurality of ultrasound images of the sample and determining a sequence with a plurality of frames ($F_1$, $F_2$, $F_3$, $F_4$) from said plurality of images,
    b) Determining a first reference frame ($F_1$) of the sequence,
    c) Determining for each frame ($F_2$, $F_3$, $F_4$) in the sequence an aligned frame ($F_{4,1}$, $F_{3,1}$, $F_{2,1}$) by means of a main transformation, wherein said aligned frame ($F_{4,1}$, $F_{3,1}$, $F_{2,1}$) is registered to the first reference frame ($F_1$),
    d) Determining a plurality of aligned differential echogenicity contrast images ($F_{4,1}$ - $F_{3,1}$, $F_{3,1}$ - $F_{2,1}$, $F_{2,1}$ - $F_1$), wherein the aligned differential echogenicity contrast images ($F_{4,1}$ - $F_{3,1}$, $F_{3,1}$ - $F_{2,1}$, $F_{2,1}$ - correspond to a difference of pairs of adjacent aligned frames ($F_{4,1}$, $F_{3,1}$, $F_{2,1}$),

e) Applying to each aligned differential echogenicity contrast image ($F_{4,1}$ - $F_{3,1}$, $F_{3,1}$ - $F_{2,1}$, $F_{2,1}$ - $F_1$) at least one first filter ($HPF1_m$, $M^{ij}$), wherein the at least one first filter comprises a temporal filter extending over a plurality of aligned differential echogenicity contrast images and/or wherein the at least one first filter comprises a spatial filter for the aligned differential echogenicity contrast images,

f) Generating at least one cumulative echogenicity contrast image ($\dot{F}_{4,1}$ - $\dot{F}_1$) by adding to each filtered aligned differential echogenicity contrast image ($\dot{F}_{4,1}$ - $\dot{F}_{3,1}$) all preceding filtered aligned differential echogenicity contrast image ($\dot{F}_{2,1}$ - $\dot{F}_1$, $\dot{F}_{3,1}$ - $\dot{F}_{2,1}$).

2. The computer-implemented method according to claim 1, wherein particularly for determining the main transformation, the method further comprises the steps of:

- Determining for each frame ($F_4$, $F_3$, $F_2$) in the sequence an associated differential displacement transformation ($\Delta U_{4,3}$, $\Delta U_{3,2}$, $\Delta U_{2,1}$, $\Delta U_{4,2}$) configured to register the frame ($F_4$, $F_3$, $F_2$) to a preceding frame ($F_3$, $F_2$, $F_1$), particularly to a directly preceding frame,
- Filtering each differential displacement transformation ($\Delta U_{4,3}$, $\Delta U_{3,2}$, $\Delta U_{2,1}$, $\Delta U_{4,2}$) with at least one second filter ($HPF2_m$),
- Determining for each frame ($F_4$, $F_3$, $F_2$) an associated cumulative displacement transformation ($U_{4,1}$, $U_{3,1}$, $U_{2,1}$), wherein the associated cumulative displacement transformation ($U_{4,1}$, $U_{3,1}$, $U_{2,1}$) is determined by combining at least one of the plurality of filtered differential displacement transformations ($\Delta U_{2,1}$), particularly all differential displacement transformations ($\Delta U_{4,3}$, $\Delta U_{3,2}$, $\Delta U_{2,1}$, $\Delta U_{4,2}$) for the frames preceding and including the frame ($F_4$, $F_3$, $F_2$, such that the frame ($F_4$, $F_3$, $F_2$) can be registered to the first reference frame ($F_1$) with the associated cumulative displacement transformation ($U_{4,1}$, $U_{3,1}$, $U_{2,1}$).

3. The computer-implemented method according to claim 2, wherein particularly for determining the aligned frame ($F_{4,1}$, $F_{3,1}$, $F_{2,1}$) the following step is executed:

- Determining for each frame ($F_4$, $F_3$, $F_2$) in the sequence the aligned frame ($F_{4,1}$, $F_{3,1}$, $F_{2,1}$) by applying the associated cumulative displacement transformation ($U_{4,1}$, $U_{3,1}$, $U_{2,1}$) to the frame ($F_4$, $F_3$, $F_2$).

4. The computer-implemented method according to claim 2, wherein for determining the plurality of aligned differential echogenicity contrast images ($F_{4,1}$ - $F_{3,1}$, $F_{3,1}$ - $F_{2,1}$, $F_{2,1}$ - $F_1$), the following steps are executed:

- Applying to each frame ($F_4$, $F_3$, $F_2$) the filtered associated differential displacement transformations ($\Delta U_{4,3}$, $\Delta U_{3,2}$, $\Delta U_{2,1}$) such that for each frame ($F_4$, $F_3$, $F_2$) a deformation corrected frame ($F_{4,3}$, $F_{3,2}$, $F_{2,1}$) is obtained that is registered to the preceding frame ($F_3$, $F_2$, $F_1$),
- Determining for each frame ($F_4$, $F_3$, $F_2$) a differential echogenicity contrast image ($F_{4,3}$-$F_3$, $F_{3,2}$-$F_2$, $F_{2,1}$-$F_1$,) by subtracting the preceding frame ($F_3$, $F_2$, from the deformation corrected frame ($F_{4,3}$, $F_{3,2}$, $F_{2,1}$),
- Applying the associated cumulative displacement transformation ($U_{3,1}$, $U_{2,1}$) associated to the preceding frame ($F_3$, $F_2$) to the differential echogenicity contrast image ($F_{4,3}$-$F_3$, $F_{3,2}$-$F_2$, $F_{2,1}$-$F_1$) and therewith determining the plurality of aligned differential echogenicity contrast images ($F_{4,1}$ - $F_{3,1}$, $F_{3,1}$ - $F_{2,1}$, $F_{2,1}$ - $F_1$).

5. The computer-implemented method according to any of the preceding claims, wherein the at least one first filter comprises a temporal high-pass filter ($HPF1_m$), particularly configured to minimize bias patterns in the frames and to highlight echogenicity variations in the frames.

6. The computer-implemented method according to any of the preceding claims, wherein the at least one first filter comprises a spatial median filter ($M^{ij}$), particularly configured to reduce speckle noise in the spatial domain due to image registration uncertainties.

7. The computer-implemented method according to any of the preceding claims, wherein the at least one first filter comprises a spatial thresholding filter, particularly configured and adapted to filter out noise in a selected value range.

8. The computer-implemented method according to any of the preceding claims and claim 2, wherein the second filter comprises a temporal filter, particularly a temporal high pass filter ($HPF2_m$) extending over a plurality of particularly adjacent differential displacement transformations.

9. The computer-implemented method according to any of the preceding claims and claim 2, wherein the differential displacement transformations ($\Delta U_{4,3}$, $\Delta U_{3,2}$, $\Delta U_{2,1}$) are determined by a displacement tracking method, particularly by a digital image correlation method.

**10.** The computer-implemented method according to any of the preceding claims and claim 2, wherein the differential displacement transformation ($\Delta U_{4,2}$) is determined for each frame ($F_4$) from a concatenated frame comprising the frame ($F_4$) and the preceding frame ($F_2$), particularly additionally comprising preceding ($F_3$, and subsequent frames ($F_5$, $F_6$) for improving the accuracy of incremental displacement transformation.

**11.** The computer-implemented method according to any of the preceding claims, wherein the ultrasound images are B-mode images.

**12.** The computer-implemented method according to any of the preceding claims, wherein the ultrasound images are acquired from samples devoid of contrast agents.

**13.** The computer-implemented method according to any of the preceding claims, wherein the cumulative displacement transformations ($U_{4,1}$, $U_{3,1}$, $U_{2,1}$) are determined in form of a tensor, wherein a strain image ($E_{4,1}$) is determined for at least one cumulative displacement transformation ($U_{4,1}$), wherein each element of the strain image ($E_{4,1}$) corresponds to at least one partial derivative along one direction at the corresponding element (i, j) of the at least one cumulative displacement transformation ($U_{4,1}$), particularly wherein each element of the strain image ($E_{4,1}$) corresponds to a sum of a plurality of or all partial derivatives along a plurality of directions at the corresponding element of the cumulative displacement transformation tensor, particularly wherein at the strain image ($E_{4,1}$) is displayed.

**14.** A computer program for generating echogenicity contrast images for visualizing physical deformations and changes in echogenicity in a tissue sample in a sequence of ultra-sound images, wherein the computer program comprises computer program code that when executed on a computer causes the computer to execute the method according any of the preceding claims.

**15.** A computer-implemented method for generating strain elastography images of a tissue sample, particularly comprising an injection of an injectate such as a liquid into the tissue sample, the method comprising the steps of:

a) Acquiring a plurality of ultrasound images of the sample and determining a sequence with plurality of frames ($F_1$, $F_2$, $F_3$, $F_4$) form said plurality of images,
b) Determining a first reference frame ($F_1$) of the particularly time-ordered sequence,
c) Determining for each frame ($F_4$, $F_3$, $F_2$) in the sequence an associated differential displacement transformation ($\Delta U_{4,3}$, $\Delta U_{3,2}$, $\Delta U_{2,1}$) configured to register the frame ($F_4$, $F_3$, $F_2$) to a preceding frame ($F_3$, $F_2$, $F_1$), particularly to a directly preceding frame,
d) Filtering each differential displacement transformation ($\Delta U_{4,3}$, $\Delta U_{3,2}$, $\Delta U_{2,1}$) with at least one second filter, particularly wherein the second filter is identical to the at least one first filter,
e) Determining for each frame ($F_4$, $F_3$, $F_2$) an associated cumulative displacement transformation ($U_{4,1}$, $U_{3,1}$, $U_{2,1}$), wherein the associated cumulative displacement transformation ($U_{4,1}$, $U_{3,1}$, $U_{2,1}$) is determined by combining at least one of the plurality of filtered differential displacement transformations ($\Delta U_{2,1}$), particularly all differential displacement transformations ($\Delta U_{4,3}$, $\Delta U_{3,2}$, $\Delta U_{2,1}$) for the frames preceding and including the frame ($F_4$, $F_3$, $F_2$, such that the frame ($F_4$, $F_3$, $F_2$) can be registered to the first reference frame ($F_1$) with the associated cumulative displacement transformation ($U_{4,1}$, $U_{3,1}$, $U_{2,1}$), wherein the cumulative displacement transformations ($U_{4,1}$, $U_{3,1}$, $U_{2,1}$) are determined in form of a tensor, particularly wherein the tensor comprises components ($v_{la}$) that represent a lateral displacement transformation of an element (i, j) in the associated frame with respect to the first reference frame and components ($v_{ax}$) that represent an axial displacement transformation of an element (i,j) in the associated frame ($F_4$, $F_3$, $F_2$) with respect to the first reference frame ($F_1$), wherein a strain image ($E_{4,1}$) is determined for at least one cumulative displacement transformation ($U_{4,1}$), wherein each element of the strain image ($E_{4,1}$) corresponds to at least one partial derivative along one direction at the corresponding element (i, j) of the at least one cumulative displacement transformation ($U_{4,1}$), particularly wherein each element of the strain image ($E_{4,1}$) corresponds to a sum of a plurality of or all partial derivatives along a plurality of directions at the corresponding element of the cumulative displacement transformation tensor, particularly wherein at the strain image ($E_{4,1}$) is displayed.

Fig. 1

a) Direct Subtraction (DS)

b) 2D Digital Image Correlation (2D-DIC)

Fig. 2

Fig. 3

Fig. 4

$$\Rightarrow \qquad U_{2,1} \qquad\qquad U_{3,1} \qquad\qquad U_{4,1} \qquad \bullet\bullet\bullet\bullet\bullet$$

$$\downarrow \qquad\qquad \downarrow \qquad\qquad \downarrow$$

$$[v_{la}(i,\,j)\; v_{ax}(i,\,j)\;]_{2,1} \qquad\qquad [v_{la}(i,\,j)\; v_{ax}(i,\,j)\;]_{4,1}$$

$$[v_{la}(i,\,j)\; v_{ax}(i,\,j)\;]_{3,1}$$

$$\downarrow \qquad\qquad \downarrow \qquad\qquad \downarrow$$

$$\left[ \alpha_1 \frac{\partial v_{ax}}{\partial j} + \alpha_2 \frac{\partial v_{ax}}{\partial i} + \alpha_3 \frac{\partial v_{la}}{\partial j} + \alpha_4 \frac{\partial v_{la}}{\partial i} \right]$$

$$\downarrow \qquad\qquad \downarrow \qquad\qquad \downarrow$$

$$E_{2,1} \qquad\qquad E_{3,1} \qquad\qquad E_{4,1}$$

Fig. 5

Europäisches
Patentamt

European
Patent Office

Office européen
des brevets

# EUROPEAN SEARCH REPORT

Application Number

EP 20 17 6356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GARDNER E A ET AL: "Removing local motion from ultrasonic images using nonaffine registration for contrast quantification", 2004 IEEE ULTRASONICS SYMPOSIUM : 23 - 27 AUGUST 2004, PALAIS DES CONGRÈS, MONTRÉAL, CANADA, IEEE OPERATIONS CENTER, PISCATAWAY, NJ, vol. 3, 23 August 2004 (2004-08-23), pages 1718-1721, XP010784316, DOI: 10.1109/ULTSYM.2004.1418156 ISBN: 978-0-7803-8412-5 * abstract * * figures 1,3 * * section II * | 1-12,14 | INV. G06T7/00 |
| A | JONGBUM SEO ET AL: "Evaluation of ultrasound tissue damage based on changes in image echogenicity in canine kidney", IEEE TRANSACTIONS ON ULTRASONICS, FERROELECTRICS AND FREQUENCY CONTROL, IEEE, US, vol. 52, no. 7, 1 July 2005 (2005-07-01), pages 1111-1120, XP011367420, ISSN: 0885-3010, DOI: 10.1109/TUFFC.2005.1503997 * abstract * * figures 2,3 * * section II-A.3 * | 1-12,14 | |
| | | | TECHNICAL FIELDS SEARCHED (IPC) G06T |

~~The present search report has been drawn up for all claims~~

| Place of search | Date of completion of the search | Examiner |
|---|---|---|
| Munich | 28 September 2020 | Eveno, Nicolas |

EPO FORM 1503 03.82 (P04C01)

Europäisches
Patentamt

European
Patent Office

Office européen
des brevets

Application Number

EP 20 17 6356

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12, 14

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

The Search Division considers that the present European patent application does not comply with the requirements of unity of invention and relates to several inventions or groups of inventions, namely:

1. claims: 1-12, 14

   generation of echogenicity contrast images from an ultrasound image sequence

   ---

2. claims: 13, 15

   generation of strain elastography images from an ultrasound image sequence

   ---